# EUROPÄISCHE PATENTSCHRIFT

(11) **EP 1 963 122 B1**
(45) Veröffentlichungstag und Bekanntmachung des Hinweises auf die Patenterteilung: **03.07.2013**
(21) Anmeldenummer: 06762789.3
(22) Anmeldetag: 25.07.2006
(51) Int. Cl.: B60J 7/14

(54) **VERSTELLBARES FAHRZEUGDACH**
ADJUSTABLE MOTOR VEHICLE ROOF
TOIT DE VEHICULE REGLABLE

(30) Priorität: 09.09.2005 DE 102005047192
(43) Veröffentlichungstag der Anmeldung: 03.09.2008
(73) Patentinhaber: Magna Car Top Systems GmbH, 74321 Bietigheim-Bissingen (DE)
(72) Erfinder: HALBWEISS, Thomas, 71686 Remseck (DE); WEZYK, Wojciech, 71065 Sindelfingen (DE); KOSCHIEN, Robert, 73760 Ostfildern (DE)
(86) Internationale Anmeldenummer: PCT/EP2006/007292
(87) Internationale Veröffentlichungsnummer: WO 2007/031149

(56) Entgegenhaltungen:
- WO-A-03/084773
- DE-A1- 10 249 640
- FR-A- 2 805 219

## Beschreibung

Die Erfindung betrifft ein Fahrzeugdach mit mindestens einem starren Dachteil gemäß dem Oberbegriff des Anspruches 1.

Ein derartiges Fahrzeugdach ist in der Druckschrift DE 195 16 877 C1 offenbart. Das bekannte Fahrzeugdach weist zwei gelenkig miteinander verbundene, starre Dachteile auf, die mittels einer Dachkinematik zwischen einer den Fahrzeuginnenraum überdeckenden Schließstellung und einer Ablagestellung verstellbar sind. Hierzu ist eine Dachkinematik vorgesehen, die aus zwei Lenkeranordnungen besteht, wobei in jedem Seitenbereich des Fahrzeugdaches eine Lenkeranordnung angeordnet ist. Beide Lenkeranordnungen sind vollkommen symmetrisch, jeweils als Viergelenkkinematik ausgebildet. Trotz des einfachen Aufbaus der Dachkinematik bestehen Bestrebungen, die Anzahl der benötigten Bauteile weiter zu reduzieren.

Die US 6,557,921 B2 zeigt ein verstellbares, längsgeteiltes Fahrzeugdach, bei dem die beiden Dachhälften in Ablagestellung aufrecht und hintereinander liegend im Verdeckkasten abgelegt sind. Um die Überführung von der nebeneinander liegenden Anordnung bei geschlossenem Dach in die hintereinander liegende Anordnung bei abgelegtem Dach bewerkstelligen zu können, sind unterschiedliche Dachteilkinematiken im linken und rechten Dachseitenbereich erforderlich.

Die DE 102 49 640 A1 zeigt als nächstliegenden Stand des Technik ein Fahrzeugdach mit asymmetrischer Dachkinematik, bei der ein Lenker, der nur im linken Dachseitenbereich angeordnet ist und zwischen einem Schwenkarm der Dachkinematik und einem weiteren Schwenkarm eines Schwenkmechanismus liegt, das gegenseitige Zusammenklappen und Ausklappen der verschiedenen Dachteile steuert.

Eine asymmetrische Dachteilkinematik ist auch aus der FR 2 805 219 A bekannt. Bei einem in dieser Druckschrift gezeigten Ausführungsbeispiel ist die Heckscheibe von einem Hebel gestützt ist, welcher lediglich im linken Dachseitenbereich vorhanden ist.

Der Erfindung liegt daher die Aufgabe zugrunde, ein Fahrzeugdach vorzuschlagen, dessen Dachkinematik aus möglichst wenig Bauteilen besteht.

Diese Aufgabe wird mit den Merkmalen der Ansprüche 1 und 4 gelöst.

Der Erfindung liegt der Gedanke zugrunde, die beiden in jeweils einem Seitenbereich des Fahrzeugdaches angeordneten Lenkeranordnungen asymmetrisch auszubilden und bei der einen und/oder der anderen Lenkeranordnung auf Kinematikbauteile wie Lenker und/oder Gelenke zu verzichten. Überraschender Weise wird hierdurch die Verstellfunktion des Fahrzeugdaches nicht beeinträchtigt. Teilweise wird die ursprüngliche Stütz- und/oder Anlenkfunktion der fehlenden Bauteile durch eine entsprechend stabilere Auslegung der noch vorhandenen Kinematikbauteile substituiert.

Im Vergleich zu herkömmlichen verstellbaren Fahrzeugdächern mit symmetrischer Dachkinematik entsteht durch das Weglassen von Bauteilen freier Raum, der für andere Kraftfahrbauteile, die nicht notwendigerweise mit dem Fahrzeugdach in Zusammenhang stehen müssen, genutzt werden kann.

Durch die Erfindung wird die Anzahl der verschleißbehafteten Bauteile reduziert, wodurch wiederum die notwendigen Instandhaltungsmaßnahmen bzw. -intervalle minimiert werden. Ein weiterer Vorteil der Erfindung besteht in der Reduktion der Material- und Montagekosten durch den Verzicht auf Kinematikbauteile.

In Ausgestaltung der Erfindung ist vorgesehen, dass beide Lenkeranordnung gemeinsam eine Mehrgelenkkinematik mit mindestens vier Gelenken zur Verstellung des Fahrzeugdaches bilden. In der einfachsten Ausführung bilden beide Lenkeranordnungen zusammen ein gemeinsames Viergelenk zum Verschwenken des Fahrzeugdaches zwischen seinen Endlagen. Zur Realisierung der Verschwenkfunktion reicht es aus, wenn die erste und die zweite Lenkeranordnung jeweils lediglich aus einem einzigen Lenker bestehen, wobei jeder Lenker mit seinem in der Schließstellung des Fahrzeugdaches unteren Ende an der Karosserie oder einem karosseriefesten Bauteil angelenkt ist. Im Vergleich zu der bisher bekannten einfachsten Variante einer Dachkinematik mit zwei symmetrischen Viergelenkkinematiken kann bei der erfindungsgemäßen Ausgestaltung des Fahrzeugdaches auf zwei Lenker und vier Gelenke verzichtet werden. Ein wesentlicher Vorteil der beschriebenen Ausführungsform besteht darin, dass in keinem Seitenbereich des Fahrzeugdaches mehr eine Gefahr durch eine Scherenwirkung von zwei sich kreuzenden Lenkern besteht, da in jedem Seitenbereich lediglich ein einziger Lenker vorhanden ist.

Eine Möglichkeit mit nur einem Lenker pro Lenkeranordnung auszukommen besteht in Weiterbildung der Erfindung darin, dass der Lenker der ersten Lenkeranordnung als C-Säulenlenker ausgebildet, also Teil eines hinteren Dachteils oder fest mit dem hinteren Dachteil verbunden ist und mit seinem in der Schließstellung des Fahrzeugdaches oberen Ende an einem vorderen Dachteil angelenkt ist und mit seinem unteren Ende an der Karosserie angelenkt ist. Weiterhin ist vorgesehen, dass der Lenker der zweiten Lenkeranordnung mit seinem in Schließstellung des Fahrzeugdaches oberen Ende mit dem vorderen Dachteil und mit seinem unteren Ende mit der Karosserie gelenkig verbunden ist. Selbstverständlich können zusätzlich zu dem hinteren Dachteil und dem vorderen Dachteil noch weitere, insbesondere starre, Dachteile vorgesehen werden, die beispielsweise in Fahrtrichtung vor dem vorderen Dachteil angeordnet sind und gelenkig mit dem hinteren oder mit dem vorderem Dachteil und/oder mit der Fahrzeugkarosserie verbunden sind. Durch die Ausgestaltung des ersten Lenkers als C-Säulenlenker kann dieser optimal sichtgeschützt in das hintere Dachteil integriert oder von dem hinteren Dachteil selbst gebildet werden.

Zur Stabilisierung der gelenkigen Anordnung beider Dachteile ist es denkbar, zusätzlich zur gelenkigen Verbindung des hinteren Dachteils mit dem vorderen Dachteil über den C-Säulenlenker eine weitere gelenkige Verbindung beider Dachteile, insbesondere im Bereich der zweiten Lenkeranordnung, vorzusehen. In diesem Fall bilden beide Lenkeranordnungen gemeinsam eine Fünfgelenkkinematik.

Gemäß einer vorteilhaften Weiterbildung der Erfindung ist vorgesehen, dass das hintere Dachteil und das vordere Dachteil ausschließlich über den C-säulenlenker gelenkig miteinander verbunden sind. Auf weitere Verbindungsgelenke zwischen den beiden Dachteilen kann mit Vorteil verzichtet werden. Bei dieser Ausführung werden insgesamt besonders wenig Bauteile benötigt.

Gemäß einer weiteren Ausführungsform der Erfindung ist vorgesehen, dass die erste Lenkeranordnung als Viergelenkkinematik und die zweite Lenkeranordnung als Zweigelenkkinematik ausgebildet ist.

Zur Realisierung der Viergelenkkinematik ist in Weiterbildung der Erfindung vorgesehen, dass ein erster Lenker der ersten Lenkeranordnung als C-Säulenlenker ausgebildet ist, welcher mit seinem in der Schließstellung des Fahrzeugdaches unteren Ende gelenkig mit der Fahrzeugkarosserie oder mit einem fahrzeugkarosseriefesten Bauteil verbunden ist. Mit seinem in der Schließstellung oberen Ende ist der erste Lenker an dem vorderen Dachteil angelenkt. Weiterhin ist ein zum ersten Lenker beabstandeter zweiter Lenker vorgesehen, welcher gelenkig mit der Fahrzeugkarosserie bzw. einem karosseriefesten Bauteil und gelenkig mit dem vorderen Dachteil verbunden ist.

Die als Zweigelenkkinematik ausgebildete zweite Lenkeranordnung besteht in Ausgestaltung der Erfindung aus einem einzigen Lenker, welcher als C-Säulenlenker ausgebildet ist. Dieser C-Säulenlenker ist einerseits karosserieseitig angelenkt und andererseits gelenkig mit dem vorderen Dachteil verbunden. Bei dieser Ausführungsform ist das hintere Dachteil bzw. sind die C-Säulenlenker des hinteren Dachteils zum einen gelenkig mit der Karosserie und zum anderen gelenkig mit dem vorderen Dachteil verbunden. Hierdurch werden Undichtigkeiten und Vibrationen mit Vorteil vermieden. Bei der beschriebenen Ausführungsform ist nur in einem Seitenbereich des Fahrzeugdaches zusätzlich zu dem C-Säulenlenker ein weiterer Lenker vorhanden, welcher das vordere Dachteil stützt und zusammen mit dem C-Säulenlenker desselben Seitenbereichs eine Viergelenkkinematik bildet. Der auf der gegenüberliegenden Seite entstandene freie Raum kann bei Bedarf für die Unterbringung weiterer Fahrzeugbauteile genutzt werden.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines verstellbaren Fahrzeugdaches in Schließstellung mit einem hinteren und einem vorderen Dachteil sowie einer als Viergelenkkinematik ausgebildeten Dachkinematik,
- Fig. 2: eine gedrehte perspektivische Ansicht des Fahrzeugdaches gemäß Fig. 1,
- Fig. 3: ein verstellbares Fahrzeugdach in Schließstellung mit einem hinteren und einem vorderen Dachteil sowie einer Dachkinematik, die aus einer Viergelenkanordnung und einer Zweigelenkanordnung besteht,
- Fig. 4: eine gedrehte perspektivische Ansicht eines Fahrzeugdaches gemäß Fig. 3 und
- Fig. 5: das Fahrzeugdach gemäß den Fig. 3 und 4 in einer Zwischenstellung.

In den Figuren sind gleiche Bauteile und Bauteile gleicher Funktion mit den gleichen Bezugszeichen gekennzeichnet.

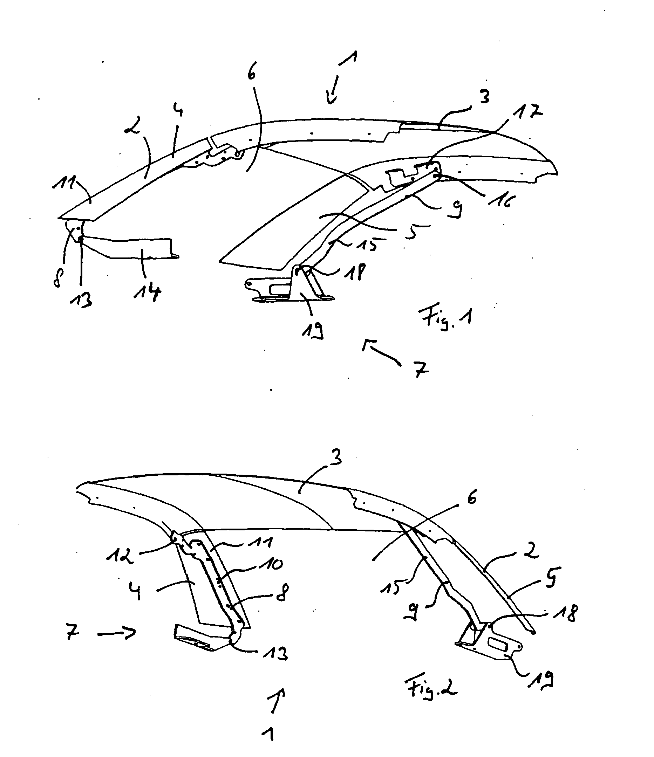

In den Fig. 1 und Fig. 2 ist ein verstellbares Fahrzeugdach 1 in Schließstellung dargestellt. Das Fahrzeugdach 1 besteht aus einem starren, in Bezug auf die Fahrtrichtung hinteren Dachteil 2 und einem vorderen Dachteil 3. Das hintere Dachteil 2 weist zwei beabstandete C-Säulen 4, 5 auf, welche starr mit einer Heckscheibe 6 verbunden sind. Um das Fahrzeugdach 1 zwischen der gezeigten Schließstellung und einer Ablagestellung zu verschwenken, ist eine Dachkinematik 7 vorgesehen. Die Dachkinematik 7 besteht aus einer ersten Lenkeranordnung 8 und einer zweiten Lenkeranordnung 9, welche an zwei gegenüberliegenden Seitenbereichen des Fahrzeugdaches 1 angeordnet sind. Die erste Lenkeranordnung 8 besteht lediglich aus einem einzigen C-Säulenlenker 10, welcher von außen durch ein Fahrzeugblech 11 sichtgeschützt ist. Der C-Säulenlenker 10 ist fest mit dem Blech 11 verbunden. Mit seinem in der gezeigten Schließstellung oberen Ende ist der C-Säulenlenker 10 mittels eines Gelenks 12 gelenkig mit dem hinteren Endbereich des vorderen Dachteils 3 verbunden. Mit seinem in der Schließstellung unteren Ende ist der C-Säulenlenker 10 über ein Gelenk 13 gelenkig mit einem karosseriefesten Lagerblock 14 verbunden. Die gelenkige Verbindung zwischen dem C-Säulenlenker 10 und dem vorderen Dachteil 3 über das Gelenk 12 stellt die einzige gelenkige Verbindung zwischen dem vorderen Dachteil 3 und dem hinteren Dachteil 2 dar.

Die auf dem gegenüberliegenden Seitenbereich angeordnete zweite Lenkeranordnung 9 besteht ebenfalls nur aus einem einzigen Lenker 15. Der Lenker 15 ist mit seinem in der Schließstellung oberen Ende mittels eines Gelenks 16 mit einer am vorderen Dachteil 3 angeschweißten Stützlatte 17 verbunden. Der im Wesentlichen gerade Lenker 15 ist an seinem in der Schließstellung unterem Ende mittels eines Gelenks 18 drehbar mit einem karosseriefesten Lagerblock 19 verbunden.

Der Lenker 15 der zweiten Lenkeranordnung 9 ist in Fahrtrichtung weiter nach vorne versetzt als der C-Säulenlenker 10 der ersten Lenkeranordnung 8. Sowohl das karosserieseitige Gelenk 18, als auch das dachteilseitige Gelenk 16 des zweiten Lenkers 15 liegen in Fahrtrichtung weiter vorne als die entsprechenden Gelenke 13, 12 des C-Säulenlenkers 10. Der C-Säulenlenker 10 mit seinen beiden Gelenken 12 und 13 bildet mit dem Lenker 15 mit seinen beiden Gelenken 16 und 18 eine gemeinsame fahrzeugdacheseitenbereichübergreifende Viergelenkkinematik. Auf zusätzliche Lenker kann bei dieser Ausführungsform verzichtet werden.

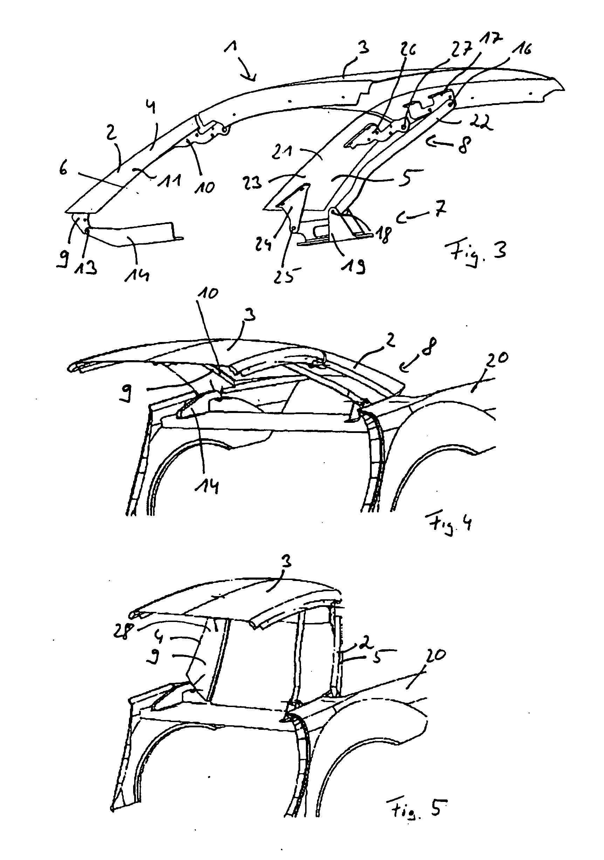

In den Fig. 3 bis 5 ist ein weiteres Ausführungsbeispiel des erfindungsgemäßen Fahrzeugdaches 1 gezeigt. In den Fig. 4 und 5 ist zusätzlich ein zu dem Fahrzeugdach 1 gehöriges Fahrzeug 20 zeichnerisch angedeutet. Dafür sind einige der in Fig. 3 gezeigten Details in den Fig. 4 und 5 nicht dargestellt.

Das in den Fig. 3 bis 5 dargestellte Fahrzeugdach 1 besteht ebenfalls aus einem hinteren Dachteil 2 und einem vorderen Dachteil 3. Das hintere Dachteil 2 weist zwei gegenüberliegende C-Säulen 4, 5 auf, die mittels einer Heckscheibe 6 miteinander verbunden sind. Zur Verstellung des Fahrzeugdaches 1 zwischen der in den Fig. 3 und 4 dargestellten Schließstellung über eine in Fig. 5 dargestellte Zwischenstellung in eine nicht gezeigte Ablagestellung ist eine Dachkinematik 7 vorgesehen. Die Dachkinematik 7 besteht aus einer ersten Lenkeranordnung 8, die in einem Seitenbereich des Fahrzeugdaches 1 angeordnet ist und aus einer auf dem gegenüberliegenden Seitenbereich des Fahrzeugdaches angeordneten zweiten Lenkeranordnung 9.

Die erste Lenkeranordnung 8 ist als Viergelenkkinematik, bestehend aus einem dreiteiligen C-Säulenlenker 21 und einem hierzu in Fahrtrichtung nach vorne versetzten, parallelen Lenker 15, ausgebildet. Als dreiteiliger C-Säulenlenker 21 ist ein Fahrzeugblechteil 23 vorgesehen, welches über ein Stützblech 24 mittels eines Gelenks 25 drehbar an einem karosseriefesten Lagerblock 19 gehalten ist. Weiterhin ist das Blechteil 23 mit seinem in der Schließstellung oberen Ende mittels eines zweiten Stützblechs 26 über ein Gelenk 27 drehgelenkig mit dem vorderen Dachteil 3 verbunden. Der Lenker 15 ist mit seinem in der Schließstellung des Fahrzeugdaches 1 oberen Ende mittels eines Gelenks 16 an einer Stützplatte 17 des vorderen Dachteils 3 angelenkt. Mittels des unteren Gelenks 18 ist der Lenker 15 gelenkig mit einem karosseriefesten Lagerblock 19 verbunden.

Die zweite Lenkeranordnung 9 besteht aus einem einteiligen C-Säulenlenker 10, der mit seinem in der Schließstellung unterem Ende über das Gelenk 13 an einem karosseriefesten Lagerblock 14 angelenkt ist. Mit seinem in der Schließstellung des Fahrzeugdaches 1 oberen Ende ist der C-Säulenlenker 10 an dem vorderen Dachteil 3 angelenkt. Der C-Säulenlenker 10 bildet mit seinen beiden Gelenken eine Zweigelenkkinematik. Auf einen zusätzlichen Lenker kann bei der zweiten Lenkeranordnung 9 verzichtet werden.

Vergleicht man die Ausführungsform gemäß den Fig. 1 und 2 mit der in den Fig. 3 bis 5 dargestellten Ausführungsform, erkennt man, dass die zweite Ausführungsform zusätzlich den dreiteiligen C-Säulenlenker 21 aufweist. Dieser ist schwächer ausgelegt als der C-Säulenlenker 10, da die Stützfunktion für das hintere Dachteil 2 hauptsächlich von der zweiten Lenkeranordnung 9 übernommen wird. Das Hauptteil des dreiteiligen C-Säulenlenkers 21 wird von dem Blechteil 23 gebildet. Zur Verstärkung des Blechteils 23 sind in den Bereichen der Anlenkung des Blechteils 23 die Stützbleche 24 und 26 vorgesehen.

In Fig. 5 ist eine Zwischenstellung des Fahrzeugdaches 1 während seiner Schwenkbewegung gezeigt. Hier ist deutlich die Platzersparnis durch Wegfall eines zweiten Lenkers bei der zweiten Lenkeranordnung 9 zu erkennen.

## Patentansprüche

1. Fahrzeugdach, mit mindestens einem starren Dachteil (2, 3), das mit mithilfe einer Dachkinematik (7) zwischen einer Schließstellung und einer Ablagestellung verstellbar ist, wobei die Dachkinematik (7) in einem ersten Seitenbereich des Fahrzeugdaches (1) eine erste Lenkeranordnung (8) und in einem gegenüberliegenden zweiten Seitenbereich des Fahrzeugdaches (1) eine zweite Lenkeranordnung (9) aufweist, **dadurch gekennzeichnet,**
**dass** die erste und die zweite Lenkeranordnung (8, 9) jeweils lediglich einen Lenker (10, 15) aufweisen und dass jeder Lenker (10, 15) mit einem Ende karosserieseitig angelenkt ist, wobei der Lenker (15) der zweiten Lenkeranordnung (9) in Fahrtrichtung weiter nach vorne versetzt ist als der Lenker (10) der ersten Lenkeranordnung (8).

2. Fahrzeugdach nach Anspruch 1,
**dadurch gekennzeichnet,**
**dass** das Fahrzeugdach (1) ein hinteres Dachteil (2) und ein in Fahrtrichtung vor dem hinteren Dachteil (2) angeordnetes, vorderes Dachteil (3) aufweist.

3. Fahrzeugdach nach Anspruch 2,
**dadurch gekennzeichnet,**
**dass** der Lenker (10) der ersten Lenkeranordnung (8) als C-Säulenlenker ausgebildet ist und mit seinem in der Schließstellung des Fahrzeugdaches (1) oberen Ende an dem vorderen Dachteil (3) angelenkt ist und dass der Lenker (15) der zweiten Lenkeranordnung (9) mit seinem in Schießstellung des Fahrzeugdaches (1) oberen Ende mit dem vorderen Dachteil (3) gelenkig verbunden ist.

4. Fahrzeugdach, mit mindestens einem starren Dachteil (2, 3), das mit mithilfe einer Dachkinematik (7) zwischen einer Schließstellung und einer Ablagestellung verstellbar ist, wobei die Dachkinematik (7) in einem ersten Seitenbereich des Fahrzeugdaches (1) eine erste Lenkeranordnung (8) und in einem gegenüberliegenden zweiten Seitenbereich des Fahrzeugdaches (1) eine zweite Lenkeranordnung (9) aufweist, **dadurch gekennzeichnet,**
**dass** die erste Lenkeranordnung (8) und die zweite Lenkeranordnung (9) eine unterschiedliche Anzahl von Lenkern und Gelenken aufweisen, wobei die erste Lenkeranordnung (8) als Viergelenkkinematik und die zweite Lenkeranordnung (9) als Zweigelenkkinematik ausgebildet ist.

5. Fahrzeugdach nach Anspruch 4,
**dadurch gekennzeichnet,**
**dass** ein erster Lenker (21) der ersten Lenkeranordnung als C-Säulenlenker ausgebildet ist, der einerseits gelenkig mit der Fahrzeugkarosserie und andererseits gelenkig mit dem vorderen Dachteil (3) verbunden ist und dass ein zweiter Lenker (22) der ersten Lenkeranordnung (8) einerseits gelenkig mit der Fahrzeugkarosserie und andererseits gelenkig mit dem vorderen Dachteil (3) verbunden ist.

6. Fahrzeugdach nach Anspruch 4 oder 5,
**dadurch gekennzeichnet,**
**dass** die zweite Lenkeranordnung (9) einen einzigen Lenker (10) aufweist, und dass dieser Lenker (10) als C-Säulenlenker ausgebildet ist, der einerseits karosserieseitig angelenkt und andererseits gelenkig mit dem vorderen Dachteil (3) verbunden ist.

7. Fahrzeugdach nach Anspruch 6,
**dadurch gekennzeichnet,**
**dass** eine im hinteren Dachteil (2) angeordnete Heckscheibe (6) vorgesehen ist, die die beiden C-Säulen (4, 5) starr miteinander verbindet.

## Claims

1. Vehicle roof, with at least one rigid roof part (2, 3) which is adjustable between a closed position and a storage position with the aid of a roof kinematic mechanism (7), wherein the roof kinematic mechanism (7) has a first link arrangement (8) in a first side region of the vehicle roof (1) and a second link arrangement (9) in an opposite second side region of the vehicle roof (1), **characterized in that** the first and the second link arrangement (8, 9) each have only one link (10, 15), and **in that** each link (10, 15) is articulated at one end on the vehicle body, wherein the link (15) of the second link arrangement (9) is offset further forwards in the direction of travel than the link (10) of the first link arrangement (8).

2. Vehicle roof according to Claim 1, **characterized in that** the vehicle roof (1) has a rear roof part (2) and a front roof part (3) arranged in front of the rear roof part (2) in the direction of travel.

3. Vehicle roof according to Claim 2, **characterized in that** the link (10) of the first link arrangement (8) is designed as a C-pillar link and is articulated at the end thereof which is at the top in the closed position of the vehicle roof (1) on the front roof part (3), and **in that** the link (15) of the second link arrangement (9) is connected in an articulated manner at the end thereof which is at the top in the closed position of the vehicle roof (1) to the front roof part (3).

4. Vehicle roof, with at least one rigid roof part (2, 3) which is adjustable between a closed position and a storage position with the aid of a roof kinematic mechanism (7), wherein the roof kinematic mechanism (7) has a first link arrangement (8) in a first side region of the vehicle roof (1) and a second link arrangement (9) in an opposite second side region of the vehicle roof (1), **characterized in that** the first link arrangement (8) and the second link arrangement (9) have a different number of links and joints, wherein the first link arrangement (8) is in the form of a four-joint kinematic mechanism and the second link arrangement (9) is in the form of a two-joint kinematic mechanism.

5. Vehicle roof according to Claim 4, **characterized in that** a first link (21) of the first link arrangement is in the form of a C-pillar link which is connected in an articulated manner at one end to the vehicle body and in an articulated manner at the other end to the front roof part (3), and **in that** a second link (22) of the first link arrangement (8) is connected in an articulated manner at one end to the vehicle body and in an articulated manner at the other end to the front roof part (3).

6. Vehicle roof according to Claim 4 or 5, **characterized in that** the second link arrangement (9) has a single link (10), and **in that** said link (10) is in the form of a C-pillar link which is articulated at one end of the vehicle body and is connected in an articulated manner at the other end to the front roof part (3).

7. Vehicle roof according to Claim 6, **characterized in that** a rear window (6) which is arranged in the rear roof part (2) and connects the two C pillars (4, 5) rigidly to each other is provided.

## Revendications

1. Toit de véhicule, comprenant au moins une partie de toit rigide (2, 3), qui peut être réglé à l'aide d'une cinématique de toit (7) entre une position fermée et une position de rangement, la cinématique de toit (7) présentant, dans une première région latérale du toit de véhicule (1), un premier agencement de bras oscillant (8) et dans une deuxième région latérale opposée du toit de véhicule (1), un deuxième agencement de bras oscillant (9),
**caractérisé en ce que**
le premier et le deuxième agencement de bras oscillant (8, 9) présentent chacun uniquement un bras oscillant (10, 15) et **en ce que** chaque bras oscillant (10, 15) est articulé du côté de la carrosserie par une extrémité, le bras oscillant (15) du deuxième agencement de bras oscillant (9) étant décalé dans la direction de conduite plus vers l'avant que le bras oscillant (10) du premier agencement de bras oscillant (8).

2. Toit de véhicule selon la revendication 1, **caractérisé en ce que**
le toit de véhicule (1) présente une partie de toit arrière (2) et une partie de toit avant (3) disposée dans la direction de conduite avant la partie de toit arrière (2).

3. Toit de véhicule selon la revendication 2, **caractérisé en ce que**
le bras oscillant (10) du premier agencement de bras oscillant (8) est réalisé sous forme de bras oscillant de colonne C et est articulé avec son extrémité supérieure à la partie de toit avant (3) dans la position fermée du toit de véhicule (1), et **en ce que** le bras oscillant (15) du deuxième agencement de bras oscillant (9) est connecté de manière articulée avec son extrémité supérieure à la partie de toit avant (3) dans la position fermée du toit de véhicule (1).

4. Toit de véhicule comprenant au moins une partie de toit rigide (2, 3), qui peut être réglé à l'aide d'une cinématique de toit (7) entre une position fermée et une position de rangement, la cinématique de toit (7) présentant, dans une première région latérale du toit de véhicule (1), un premier agencement de bras oscillant (8) et dans une deuxième région latérale opposée du toit de véhicule (1), un deuxième agencement de bras oscillant (9),
**caractérisé en ce que**
le premier agencement de bras oscillant (8) et le deuxième agencement de bras oscillant (9) présentent un nombre différent de bras oscillants et d'articulations, le premier agencement de bras oscillant (8) étant réalisé sous forme de cinématique à quatre articulations, et le deuxième agencement de bras oscillant (9) étant réalisé sous forme de cinématique à deux articulations.

5. Toit de véhicule selon la revendication 4, **caractérisé en ce**
**qu'**un premier bras oscillant (21) du premier agencement de bras oscillant est réalisé sous forme de bras oscillant de colonne C, qui est connecté de manière articulée d'une part à la carrosserie du véhicule et d'autre part de manière articulée à la partie de toit avant (3), et en ce qu'un deuxième bras oscillant (22) du premier agencement de bras oscillant (8) est connecté de manière articulée d'une part à la carrosserie du véhicule et d'autre part de manière articulée à la partie de toit avant (3).

6. Toit de véhicule selon la revendication 4 ou 5, **caractérisé en ce que**
le deuxième agencement de bras oscillant (9) présente un bras oscillant unique (10) et **en ce que** ce bras oscillant (10) est réalisé sous forme de bras oscillant de colonne C, qui est connecté de manière articulée d'une part du côté de la carrosserie et d'autre part de manière articulée à la partie de toit avant (3).

7. Toit de véhicule selon la revendication 6, **caractérisé en ce**
**qu'**il est prévu une vitre arrière (6) disposée dans la partie de toit arrière (2), qui relie rigidement l'une à l'autre les deux colonnes C (4, 5).
